# EUROPEAN PATENT APPLICATION

(11) **EP 1 800 945 A2**
(43) Date of publication of application: **27.06.2007**
(21) Application number: 06026176.5
(22) Date of filing: 18.12.2006
(51) Int. Cl.: B60P 1/43, B60J 5/10

(54) **Cargo door for vehicles, trailers and semi-trailers**

(30) Priority: 20.12.2005 IT MI20052416
(71) Applicant: ITALPLAST S.r.L., 47032 Bertinoro FO (IT)
(72) Inventor: Zanelli, Lorenzo, 47020 Cesena (Forli) (IT)
(74) Representative: Lunati, Vittoriano

(57) **Abstract**

A cargo door is provided corresponding to a main loading aperture (4) and comprising: a plurality of jointed portions (1a); lowering means (3) defining a lowering axis (3b) and suitable for lowering at least part of the portions (1a); opening means (7) defining at least one hinge axis (7b) crosswise to the lowering axis (3b) and suitable for moving at least part of the portions (1a); the cargo door consisting of a combined tailgate (2) and door (6) and the lowering means (3) and opening means (7) being suitable for permitting opening of the door (6) independently of lowering of the tailgate (2).

## Description

The present invention relates to a cargo door for vehicles, trailers and semi-trailers, in particular for refrigerated semi-trailers designed for road transport, of the type specified in the preamble of the first claim.

As it is known, vehicles and the like designed for the transport of goods and similar are provided with a cargo door, often located at the rear of said vehicles, which is used for loading the goods.

A first type of cargo door consists of a double door which occupies the entire rear face of the vehicle and is hinged along the sides of the same. The door wings can be opened to angles of approximately 270°, so that they are perfectly aligned, once open, with the side walls of the vehicle, in order not to constitute an impediment to loading of the goods.

The vehicles or trailers or semi-trailers provided with doors are loaded by means of forklifts or hoists, which can therefore operate without impediments and obstructing elements.

Another type of cargo doors is provided by a tailgate, i.e. a rotating surface with rotation axis parallel to the ground so that it closes the vehicle and also, when open, provides a platform for connection to the loading wharves or a ramp for loading the goods from the ground.

Also in this case the door occupies preferably the entire rear face of the vehicles or the like. Hydraulic cylinders are also provided for support and movement of the tailgate.

The tailgate is very useful if loading wharves or similar are present and it is necessary to connect the surface of the wharf to the base surface of the vehicle or trailer or semi-trailer.

The above-mentioned known technique has some significant drawbacks.

Said double doors or tailgates are not versatile and if a vehicle with a door not suited to the operation to be performed is used, it can constitute an impediment preventing easy loading of the goods, thus prolonging the loading time.

Certain situations are more suited to the use of tailgates, and others to the use of double doors.

Furthermore, the cargo doors according to the known technique reduce the space in the load compartment. The dimensions of the vehicles, trailers, semi-trailers, and therefore of their load compartment, is in fact substantially standardised according to precise needs concerning road transport and ease of handling, regardless of the quantity of goods transported.

This problem of reduction of working space is felt in particular in refrigerated semi-trailers with a double door. In refrigerated semi-trailers the goods are arranged inside large containers and these are also standardised.

In said circumstances a few dozen centimetres' working space less in the load compartment often means that there is no room for containers with a relatively high volume.

Attempts have already been made to solve the above drawbacks, by replacing the door with an insulating panel positioned substantially outside the load compartment but in contact with it. Said panel nevertheless constitutes a considerable hindrance during loading and unloading operations, hence it is not practical.

In this situation the technical aim of the present invention is to design a cargo door able to substantially remedy the above-mentioned drawbacks.

Within said technical aim, an important object of the invention is to provide a cargo door that is versatile and can adapt to various loading situations.

Another important object of the invention is to provide a cargo door with reduced overall dimensions at the level of the load compartment of the vehicle or trailer or semi-trailer, in order not to restrict the load compartment.

The technical aim and the objects specified are achieved by a cargo door for vehicles, trailers and semi-trailers, characterised in that it comprises one or more of the technical solutions described and claimed below.

The description of a preferred embodiment of the invention, shown in the accompanying drawings, is provided below by way of non-limiting example, in which:
**Fig. 1** shows the cargo door according to the invention open according to two opening possibilities;
**Fig. 2** shows the cargo door according to the invention closed;
**Fig. 3** highlights the cargo door according to the invention open according to a first opening mode;
**Fig. 4** presents the cargo door according to the invention open according to a second opening mode;
**Fig. 5** schematises the refrigerated semi-trailer provided with cargo door according to the invention; and
**Fig. 6** shows a detail of the refrigerated semi-trailer.

With reference to the above Figures, the cargo door according to the invention is indicated overall by number **1.**

It is applied to vehicles or trailers or semi-trailers **10** for the transport of goods, passengers or other, in particular to refrigerated semi-trailers **10a** used to transport perishable goods.

The same all have a closed load compartment **11** substantially in the shape of a parallelepiped or in any case substantially box-shaped. The front face **11a** of said parallelepiped is the part nearest the tractor or the control cab, while the rear face **11b** presents a main loading aperture **4** where the cargo door 1 is applied. Said main aperture 4 preferably occupies the whole of the rear face 11 b.

The cargo door **1** advantageously presents a plurality of jointed portions **1a,** lowering means **3** and opening means **7** selectively operating on the portions 1a so as to substantially provide a combined tailgate **2** and door **6.**

The lowering means **3** and opening means **7** are independent so as to permit selective and alternative use of the cargo door **1** as a tailgate **2** or as a door **6.**

In particular, the lowering means **3** comprise joints **3a** defining a lowering axis **3b** at a lower edge of the cargo door **1,** and motor elements **3c** suitable for rotating at least part of the portions 1a around the lowering axis **3b.**

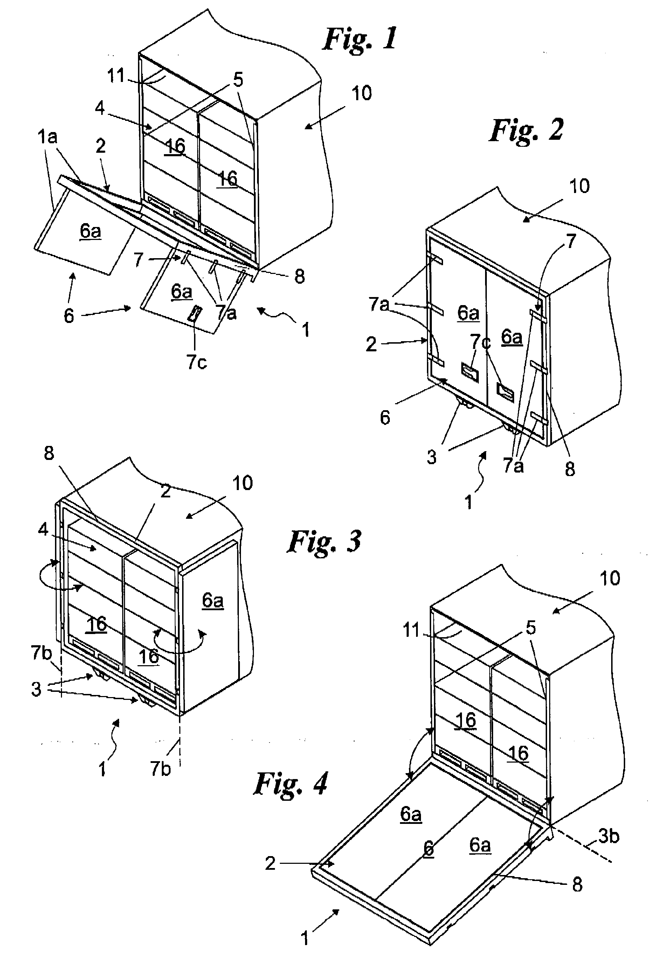

Preferably the motor elements **3c** comprise a plurality of hydraulic cylinders that are activated automatically and are suitable for supporting the tailgate even in the case of considerable loads and similar. Figures 2 and 3 show tailgates **2** provided with two hydraulic cylinders. There can be only one hydraulic cylinder and the same can be replaced by an electrically controlled actuator.

The opening means 7 comprise hinges **7a** defining at least one hinge axis **7b** crosswise to the lowering axis 3b and control elements **7c** suitable for permitting movement of at least part of the portions 1a around the hinge axis **7b.**

Preferably two hinge axes **7b** are provided spaced from one another and suitable for defining a door 6 with two wings **6a.**

The control elements **7c** are handles and locks. They can also consist of latches, bolts or other.

The cargo door **1** is preferably positioned on the outside of the load compartment **11** and furthermore the door 6 is advantageously provided inside the tail-gate **2.**

Therefore the tailgate **2** is substantially the same size as the main loading aperture **4.**

Contact elements **5** are present, such as gaskets and similar, surrounding the main aperture **4,** to join the tailgate **2** to the walls of the compartment **11** when the tailgate **2** is in the raised position.

The door **6** is supported by doorposts **8** or similar, obtained on the tailgate **2,** on which the portion of the hinges **7a** not connected to the wings **6a** is positioned.

Said door **6** defines in practice a second loading aperture **4a** having an area greater than half the area of the main loading aperture **4.**

Appropriately the areas of the two apertures **4** and **4a** substantially coincide, even though the area of the second aperture **4a** has a surface smaller than the area of the first aperture **4** because said area is limited by the doorposts **8.**

The two apertures **4** and **4a** coincide perfectly if, for example, the cargo door **1** consists of a single door 6 of the tilt and turn type, obtained by means of appropriate arrangement of the joints **3a** and hinges **7a,** and by means of selective activation, also manual, of the same.

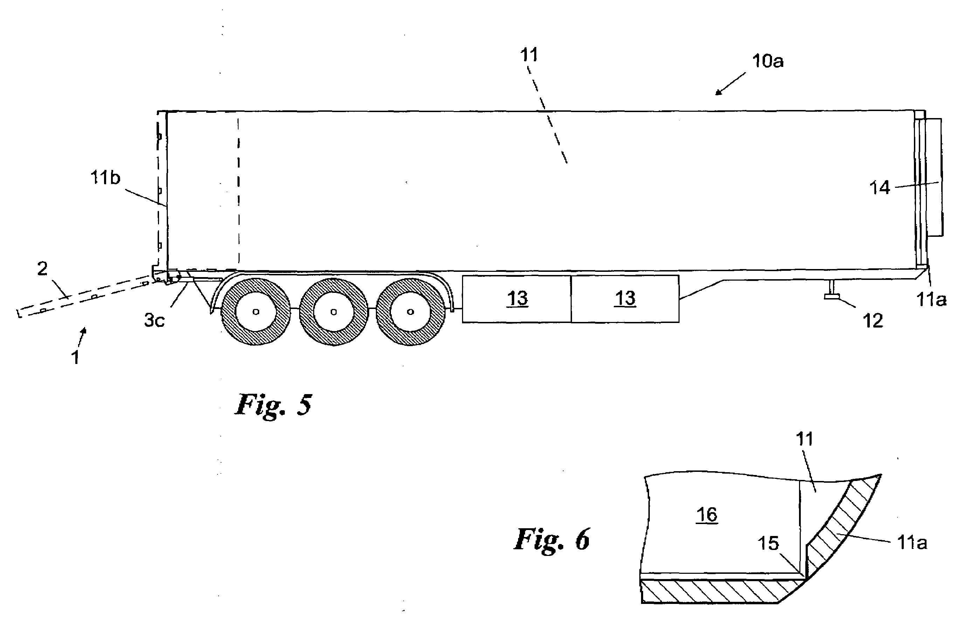

In the embodiment shown the two wings 6a can be advantageously opened towards the outside by an angle equal to approximately three times a right angle, so that the same can be substantially aligned with the side walls of the load compartment **11,** as shown in Figures 3 and 5.

As previously mentioned, the cargo door **1** is preferably applied on vehicles or trailers or semi-trailers **10** and in particular on refrigerated semi-trailers **10a.**

Said refrigerated semi-trailers **10a** are joined to the tractor by means of a pin **12** which guarantees freedom of rotation, thus defining an articulated lorry.

Their front face **11a** has a curved surface suitable for permitting partial rotation of the semi-trailer **10a** with respect to the tractor.

The cargo door **1** is obtained outside the load compartment **11** and is thermally insulated.

As shown in figure 5, the semi-trailers 10a preferably comprise lower compartments **13** and a refrigeration system **14** positioned at the level of the lower compartments **13** or alternatively near the curved front face **11 a.**

Base dimensions are approximately 14.4 m x 2.5 m with height similar to the width. Said dimensions are defined fixed and standardised in order to optimise manoeuvrability of the semi-trailers 10a and traffic flow.

The load compartment **11** therefore has similar dimensions, minus the dimensions of the thermally insulated walls, having a thickness of approximately 4.5 cm, and the dimensions of the curved front face **11 a.**

The walls of the load compartment 11 have an internal chamfer 15 near the joint between the curved front wall 11a and each side wall, so that the curved wall forms a step at the end, as shown in Fig. 6.

Said feature provides a larger load surface: the internal working dimensions of the base of the lower compartment **11** described are approximately 13.65 m x 2.45 m.

In the refrigerated semi-trailer 10a goods and the like are loaded already packed in containers **16,** with parallelepiped shape and base dimensions of 0.8 m x 1.2 m and a height greater than said dimensions.

These containers **16** are suitably arranged with the base in contact with the base of the load compartment **11** and in rows of two. They are all slightly spaced from one another by packaging material and the like. Furthermore, spacing of said containers allows the air to circulate and perform its refrigerating action.

The invention achieves important advantages.

The cargo door **1** is versatile and can be used in different loading conditions: in the presence of loading wharves, it can be used as a connection platform, in the presence of a forklift it can be used as a double door and if neither are present, it can be used as a loading ramp.

Furthermore it is obtained completely outside the load compartment **11,** and therefore does not take up space in the load compartment **11.**

This advantage is crucial in refrigerated semi-trailers **10a:** in said case, in fact, it is possible, thanks to the space gained due to lack of a cargo door **1** inside the compartment **11** and the presence of the internal chamfer **15,** to load one row more of containers of goods and the like. In fact, if **17** rows of containers are arranged giving a total of **34** containers, a linear length of 13.6 m is occupied.

The invention is subject to modifications and variations falling within the scope of the inventive concept.

All the details can be replaced by equivalent elements with any materials, forms and dimensions.

## Claims

1. Cargo door for vehicles, trailers and semi-trailers with a load compartment (11) and a main loading aperture (4), said cargo door (1) being provided at the level of said main aperture (4) and being **characterised in that** it comprises:
- a plurality of jointed portions (1a); lowering means (3) defining a lowering axis (3b) at a lower edge of said cargo door (1) and suitable for lowering at least part of said portions (1a) around said lowering axis (3b); and opening means (7) defining at least one hinge axis (7b) crosswise to said lowering axis (3b) and suitable for permitting the movement of at least part of said portions (1a) around said hinge axis (7b),
- said cargo door consisting substantially of a combined tailgate (2) and door (6) and said lowering means (3) and opening means (7) being independent so as to permit the opening of said door (6) independently from lowering of said tailgate (2).

2. Cargo door according to claim 1, wherein two hinge axes (7b) are provided spaced from each other and suitable for defining a door (6) with two wings (6a).

3. Cargo door according to one or more of the preceding claims, in particular claim 1, wherein said tailgate (2) is substantially the size of said main aperture (4) and wherein said door (6) is provided inside said tailgate (2) and is suitable for defining a second loading aperture (4a) having an area greater than half the area of said main loading aperture (4).

4. Cargo door according to one or more of the preceding claims, in particular claim 3, positioned outside said load compartment (11).

5. Cargo door according to one or more of the preceding claims, in particular claim 1, wherein said lowering means (3) comprise joints (3a) defining said lowering axis (3b) and motor elements (3c) suitable for rotating at least part of said portions (1a) around said lowering axis (3b), and wherein said opening means (7) comprise hinges (7a) defining at least one said hinge axis (7b) and control elements (7c) suitable for permitting movement of at least part of said portions (1a) around said hinge axis (7b).

6. Cargo door according to one or more of the preceding claims, in particular claim 1, wherein doorposts (8) are provided for supporting said door (6) obtained in said tailgate (2) and providing edges of the same.

7. Cargo door according to one or more of the preceding claims, in particular claim 1, wherein said tailgate (2) has substantially the size of said main aperture (4) and wherein said door (6) is inside said tailgate (2).

8. Refrigerated semi-trailer presenting a load compartment (11), a main loading aperture (4) and a thermally insulated cargo door (1) according to one or more of the preceding claims 1, in particular claim 4.

9. Refrigerated semi-trailer according to one or more of the preceding claims, in particular claim 8, comprising a curved front face (11a) and lateral faces, and wherein said load compartment (11) presents an internal chamfer (15) near the connection between said curved front face (11a) and said lateral faces, so as to increase the surface of said load compartment (11).
